# EUROPÄISCHE PATENTSCHRIFT

(11) **EP 0 909 955 B1**
(45) Veröffentlichungstag und Bekanntmachung des Hinweises auf die Patenterteilung: **23.09.2009**
(21) Anmeldenummer: 98115961.9
(22) Anmeldetag: 25.08.1998
(51) Int. Cl.: G01P 3/48, G01B 7/30, G01C 1/00, G01D 5/20

(54) **Induktiver Winkelsensor**
Inductive angular sensor
Détecteur angulaire inductif

(30) Priorität: 05.09.1997 DE 19738836
(43) Veröffentlichungstag der Anmeldung: 21.04.1999
(73) Patentinhaber: Hella KGaA Hueck & Co., 59552 Lippstadt (DE)
(72) Erfinder: Irle, Henning, 59557 Lippstadt (DE); Kost, Norbert, 59590 Geseke (DE); Schmidt, Franz-Josef, 33154 Salzkotten (DE)

(56) Entgegenhaltungen:
- EP-A- 0 446 181
- DE-A- 2 158 713
- DE-A- 3 642 607
- US-A- 4 223 300
- US-A- 4 737 698
- US-A- 5 394 042
- US-A- 5 406 155
- US-A- 5 625 239

## Beschreibung

Die Erfindung betrifft einen induktiven Winkelsensor nach dem Oberbegriff des Anspruchs 1.

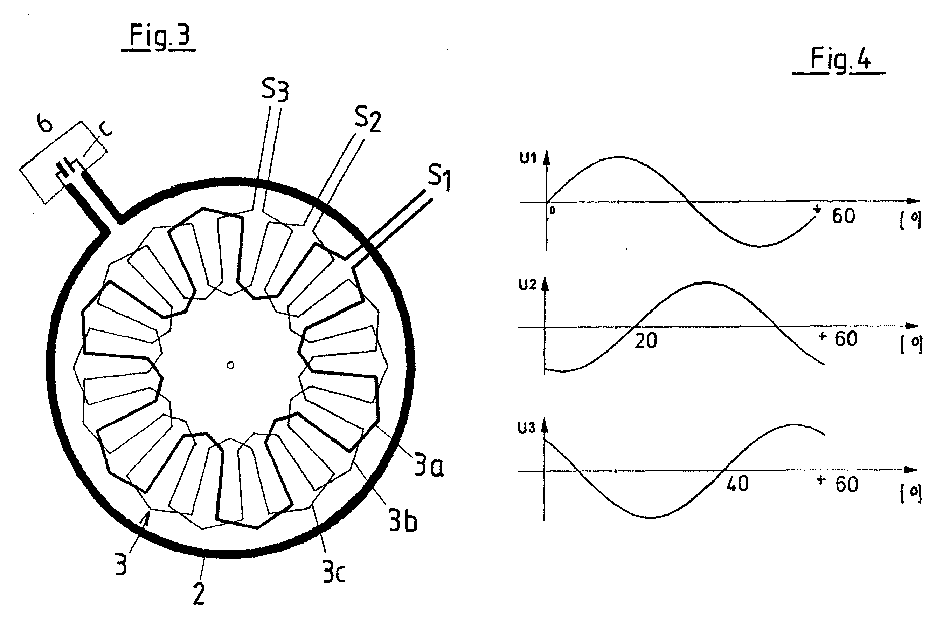

Aus der Europäischen Patentanmeldung 0 159 191 A2 ist aus der in Figur 3 gezeigten Ausführungsform eines Positionssensors ein solcher Winkelsensor bekannt. Das Aufbauprinzip dieses Positions- bzw. Winkelsensors besteht darin, daß winkelperiodisch gegeneinander versetzt angeordnete Reihenschaltungen von Sekundärspulen vorgesehen sind, wobei jede Reihenschaltung aus einem oder mehreren Paaren von gegenphasig geschalteten Spulen besteht. Durch die gegenphasige Verschaltung ist das von Primärspulen in eine Reihenschaltung von Sekundärspulen eingekoppelte Ausgangssignal jeweils (annähernd) Null.

Ein bewegliches Element, dessen Position relativ zu der Spulenanordnung bestimmt werden soll, weist einen "Flußkoppler" auf, der gegenüber der Ausdehnung der Meßstrecke klein ausgebildet ist und die Kopplung zwischen der oder den Primärspulen und einzelnen Sekundärspulen verändert. Die Reihenschaltung von Sekundärspulen, die eine so beeinflußte Sekundärspule enthält, erzeugt nun ein von Null verschiedenes Ausgangssignal. Jede der Reihenschaltungen von Sekundärspulen ist mit dem Teil eines Phasenschiebernetzwerkes verbunden, so daß am Ausgang dieses Netzwerkes ein gegenüber dem in die Primärspulen eingekoppelten Signal phasenverschobenes Ausgangssignal vorliegt, welches von der Position des beweglichen Elementes abhängt. Die Auswertung des Zeitunterschiedes zwischen dem in die Primärspulen eingekoppelten Signal und dem Ausgangssignal des Phasenschiebernetzwerkes dient zur Bestimmung der jeweiligen Position des beweglichen Elementes. Als Flußkoppler wird in der EP 0 159 191 A2 ein relativ zum Meßpfad klein ausgeführtes magnetisches Element oder auch ein leitender Ring (Seite 4, 2. Absatz) vorgeschlagen, wobei letzterer als nachteilig beschrieben wird, da er ein nur schwaches Ausgangssignal bewirkt.

Nachteilig an diesem Winkelsensor ist die Verwendung eines Phasenschiebernetzwerkes, dessen Toleranzen wesentlich in die erzielbare Meßgenauigkeit des Sensors eingehen. Auch ist das aus der Reihenschaltung von unbeeinflußten Sekundärspulen erwartete Null-Signal kaum, jedenfalls nicht ohne zusätzliche aufwendige Abgleichmaßnahmen, zu erreichen.

Aus der Druckschrift mit der Veröffentlichungsnummer DE 36 42 607 A1 ist ein Winkelsensor der eingangs genannten Art bekannt, der den vorgenannten Nachteil des Winkelsensors abhilft. Aus den Druckschriften mit den Veröffentlichungsnummern EP 0 446 181 A2, DE 2,158,713 und US 4,223,300 sind ähnliche Winkelsensoren bekannt. Die Rotorelemente der Winkelsensoren der genannten Druckschriften sind zum Teil als scheibenförmige Schaltungsträger ausgebildet, die einseitig oder zweiseitig mit einer Leiterbahnstruktur versehen sind, die die Kurzschlussleitung der sich periodisch wiederholenden Schleifenstruktur bildet. Die Herstellung solcher Rotorelemente ist aufwändig, da mehrere Produktionsschritte notwendig sind, um die Rotorelemente zu bilden. Es müssen scheibenförmige Schaltungsträger hergestellt werden, die entweder zuvor oder nach der Herstellung mit den gewünschten Schleifenstrukturen der Kurzschlussleitungen versehen werden.

Die Druckschrift mit der Veröffentlichungsnummer US 4,737,698 beschreibt einen induktiver Winkelsensor, der diesen Nachteil nicht besitzt, da der Rotor als ein aus leitfähigem Material bestehendes Stanzteil ausgebildet ist. Dies vereinfacht die Herstellung des Winkelsensors und insbesondere des Rotorelements des Winkelsensors. Eine derartige Ausführung des Rotorelements ist besonders einfach und kostengünstig.

Die aus den genannten Druckschriften bekannten Winkelsensoren der eingangs genannten Art weisen darüber hinaus für jede Empfangsspule Hin- und Rückleitungen zu den schleifenförmigen Leiterbahnstrukturen auf. Dadurch ist ein großer Platzbedarf für jede Empfangsspule auf einem Schaltungsträger für die Empfangsspulenstrukturen notwendig. Durch diesen hohen Platzbedarf ist der Entwickler in der Gestaltung des Layouts des Schaltungsträgers für die Leiterbahnstrukturen eingeschränkt.

Bei dem erfindungsgemäßen induktiven Winkelsensor weist somit das Rotorelement, welches die Kopplung zwischen der Erregerspule und den Empfangsspulen bewirkt, bereits selbst eine besondere, periodisch geometrische, Struktur auf, so daß eine Winkelveränderung des Rotorelementes relativ zum Statorelement zu einer Veränderung der Kopplung zwischen der Erregerspule und den Empfangsspulen und damit direkt zu einem auswertbaren periodischen Signal führt.

Der Erfindung liegt die Aufgabe zugrunde, einen Winkelsensor der eingangs genannten Art, der ein Statorelement mit Erregerspule und mehrere Empfangspulen sowie ein Rotorelement mit mindestens einer Kurzschlussleitung aufweist, so fortzubilden, dass er bei kompakteren Abmessungen ein erhöhtes Auflösevermögen besitzt.

Diese Aufgabe wird erfindungsgemäß dadurch gelöst, dass ein Anschlusspunkt an einer Empfangsspule mit einem gemeinsamen Summenpunkt elektrisch verbunden ist. Der Anschluss einer Empfangsspule ist dann mit der Summenleitung - vergleichbar der Sternschaltung eines Drehstromgenerators mit Sternpunkt - verbunden. Da die Rückleitungen der einzelnen Empfangsspulen somit nicht auf der Platine zurückgeführt werden müssen, kann so bei gleicher Leiterbahndichte die Zahl der Empfangsspulen verdoppelt werden, wodurch das Auflösevermögen des Winkelsensors entsprechend erhöht werden kann.

Darüber hinaus umfasst das Statorelement eine mehrlagige Leiterplatte, auf der die Erregerspule, die Empfangsspulen sowie eine Auswerteschaltung angeordnet sind, wobei die Empfangsspulen durch auf verschiedenen Leiterplattenebenen angeordnete Leiterbahnen jeweils in Umfangsrichtung eine sich periodisch wiederholende Schleifenstruktur ausbilden. Dies führt zu einer weiteren Verkleinerung der Baugröße des Sensors.

Die Druckschrift mit der Veröffentlichungsnummer US 5,406,155 beschreibt zur Vermeidung dieses Nachteils einen induktiven Winkelsensor, bei dem die Empfangspulen mit einem gemeinsamen Summenpunkt verbunden sind. Darüber hinaus sind die Empfangspulen auf verschiedenen Ebenen einer mehrlagigen Leiterplatte angeordnet. Es kann so bei gleicher Leiterbahndichte die Zahl der Empfangsspulen vergrößert werden, wodurch sich auch das Auflösevermögen des Winkelsensors erhöht. Da sich bei diesem Winkelsensor die Erregerspule nicht auf dem Stator, sondern auf dem Rotor befindet, kommt hier allerdings ein abweichendes Funktionsprinzip zur Anwendung.

Das Rotorelement bildet eine Kurzschlußleitung aus oder weist eine Kurzschlußleitung auf, welche zumindest entlang von Teilbereichen des Rotorelementes in dessen Umfangsrichtung eine periodische Schleifenstruktur ausbildet. Diese periodische Schleifenstruktur, deren konkrete Ausgestaltung im einzelnen variieren kann, ist im z.B. wesentlichen mäanderförmig ausgebildet und ähnelt (oder gleicht sogar) damit der geometrischen Struktur der Empfangsspule.

Da eine Winkelveränderung des Rotorelementes die Kopplung aller Empfangsspulen bezüglich der Erregerspule verändert, können vorteilhafterweise die Ausgangsspannungen mehrerer Empfangsspulen zur Positionsauswertung herangezogen werden. Durch eine kompensatorische oder, besonders vorteilhaft, ratiometrische Auswertung mehrerer Spulenspannungen können so Fertigungstoleranzen des induktiven Winkelsensors oder auch Fehler durch Fehljustierungen von Teilen der Sensoranordnung relativ zueinander oder sogar größere Störeinflüsse gut kompensiert werden.

Weitere vorteilhafte Ausgestaltungen und Weiterbildungen des erfindungsgemäßen induktiven Winkelsensors ergeben sich aus den abhängigen Ansprüchen.

Je nach Anwendung kann das Trägermaterial des Rotorelementes aber auch aus Kunststoff oder einem Hybrid-Material bestehen, wobei die periodische Schleifenstruktur durch eine Metallbeschichtung oder auch durch eine Leiterpaste realisiert werden kann.

Vorteilhaft ist auch, auf das Rotorelement beidseitig eine Kurzschlußleitung ausbildende Schleifenstruktur aufzubringen, wobei es zur Verstärkung der Sensorausgangssignale vorteilhaft ist, wenn beide Schleifenstrukturen gleich ausgebildet und parallel zueinander angeordnet sind. Eine andere Möglichkeit zur Erzeugung eines möglichst deutlichen Sensorsignales besteht darin, die Schleifenstruktur der Kurzschlußleitung zudem durch mehrere konzentrisch oder spiralförmig ineinander verschachtelte Windungen auszuführen.

Ebenfalls vorteilhaft ist auch, daß die Empfangsspulen auf dem Statorelement ebenso wie die Kurzschlußleitung des Rotorelementes eine periodische Schleifenstruktur ausbilden. Die Kontur einer Leiterschleife ist dadurch gegeben, daß sie in einem Polarkoordinatensystem eindeutig beschrieben werden kann und daß der Gradient der beschriebenen Kurve im Polarkoordinatensystem df(r, ϕ )/d ϕ abwechselnd positiv und negativ ist, wobei der Teil der Kurve mit negativem Gradienten symmetrisch zum Teil der Kurve mit positivem Gradienten ist (z.B. dreieckförmig) und der an den Umkehrpunkten auch ein Teil mit dem Gradienten Null aufweisen kann (z.B. ausgebildet als Mäander, Trapez).

Vorteilhaft bezüglich einer besonders einfachen Auswertung (aber keineswegs zwingend) ist es, wenn die Empfangsspulen und die Kurzschlußleitung die gleiche winkelabhängige Periodizität aufweisen.

Besonders vorteilhaft ist es, eine ungeradzahlige Anzahl von Empfangsspulen, und zwar mindestens drei, vorzusehen. So können bei einer Auswertung, welche die Ausgangssignale mehrerer Empfangsspulen berücksichtigt, die Ausgangssignale einzelner Spulen elektrisch invertiert und ebenfalls zur Auswertung herangezogen werden, während sich bei einer geradzahligen Empfangsspulenanzahl durch Invertierung eines Spulenausgangssignales genau wieder das Spulenausgangssignal einer anderen Empfangsspule ergibt. Der Informationsgehalt der Ausgangssignale ist somit bei einer ungeradzahligen Empfangsspulenanzahl wesentlich erhöht.

Die Erregerspule kann besonders einfach als entlang des Umfangs des Statorelementes konzentrisch geführte Leiterbahn ausgebildet sein. Sie kann aber auch, um kleine Sensordurchmesser zu realisieren, "hinter" den Empfangsspulen, d.h. in einer zu den Empfangsspulen parallelen Ebene, angeordnet sein.

Der Erregerkreis ist, besonders vorteilhaft, als LC-Schwingkreis unter Ausnutzung der Erregerspule als Induktivität ausführbar. Gegenüber einem Quarzoszillator können so zumindest die Kosten eines Schwingquarzes eingespart werden. Darüber hinaus reagiert ein LC-Schwingkreis - als ein sogenannter "weicher" - Schwingkreis flexibler und unempfindlicher auf äußere elektromagnetische Störeinflüsse.

Besonders vorteilhaft zum Ausgleich fertigungs- oder anwendungsbedingter Toleranzen ist es, wenn die Auswerteschaltung die Leiterspannungen der Empfangsspulen ratiometrisch auswertet. Durch eine Verhältnisbildung werden so zum Beispiel mechanische Ungenauigkeiten bezüglich des Abstands bzw. der Parallelität von Erregerspule und Empfangsspulen weitgehend ausgeglichen. Hierzu kann, besonders vorteilhaft, die Auswerteschaltung, zum Beispiel je nach Winkelbereich, die auszuwertenden Empfangsspulenspannungen jeweils auswählen, um so eine höchstmögliche Genauigkeit zu erreichen.

Im folgenden soll ein Ausführungsbeispiel eines erfindungsgemäßen induktiven Winkelsensors anhand der Zeichnung dargestellt und näher erläutert werden.

Es zeigen
Figur 1 und 2 die Prinzipskizzen einer Ausführungsform des Statorelementes und des Rotorelementes,
Figur 3 eine Skizze zur Darstellung des Funktionsprinzips des induktiven Winkelsensors,
Figur 4 ein Diagramm der Spannungsverläufe der Empfangsspulen des in Figur 3 dargestellten induktiven Winkelsensors,
Figur 5 eine Skizze zur Anordnung und Verschaltung der Empfangsspulen,
Figur 6 verschiedene Ausführungsformen der Schleifenstruktur der Kurzschlußleitung auf dem Rotorelement.

Zunächst sei anhand der Figur 3 der prinzipielle Aufbau sowie das Funktionsprinzip des erfindungsgemäßen induktiven Winkelsensors erläutert:

Die Erregerspule (2) besteht aus einer oder mehreren Leiterbahnwindungen auf einer nicht dargestellten Leiterplatte. Diese Leiterbahn wird elektrisch mit einem Kondensator (C) verbunden, so daß sich zusammen mit der Induktivität der Leiterbahn ein LC-Schwingkreis (6) ergibt. Dieser LC-Schwingkreis (6) beinhaltet eine aktive Schaltung, welche den LC-Kreis derart ansteuert, daß sich in der Erregerspule (2) ein sinusförmiger Spannungs- und Stromverlauf ergibt.

Der Strom, der durch die Erregerspule (2) fließt, erzeugt nun ein magnetisches Wechselfeld in den Empfangsspulen (3), die sich innerhalb des vom magnetischen Wechselfeld durchsetzten Gebietes befindet. Durch magnetische Induktion entstehen an den Anschlüssen (S1, S2, S3) der Empfangsspulen (3) induzierte Spannungen, die einer hier nicht dargestellten Auswerteschaltung zugeführt werden.

Das Empfangsspulensystem (3) des Winkelsensors besteht aus drei einzelnen Empfangsspulen (3 a, 3 b, 3 c), die um einen bestimmten Winkel versetzt und vorzugsweise auf mehreren Ebenen einer mehrlagigen Leiterplatte angeordnet sind. Da jede Empfangsspule (3 a, 3 b, 3 c) in Umfangsrichtung des Statorelementes (1) jeweils 6 Windungen, ausgebildet durch eine mäanderförmige Schleifenstruktur, aufweist, erhält man eine symmetrische Spulenanordnung, wobei die Windungen benachbarter Spulen um 20° gegeneinander versetzt sind.

In der Figur 3 nicht dargestellt ist das zum Winkelsensor gehörende Rotorelement. Dieses befindet sich berührungslos in einem geringen Abstand zum Statorelement (1) und ist relativ zu diesem bezüglich einer gemeinsamen Symmetrieachse drehbar angeordnet. Der Rotor bildet mindestens eine Kurzschlußleitung aus, welche, zumindest über Teilbereiche, entlang der Umfangsrichtung des Rotorelementes eine sich periodisch wiederholende Schleifenstruktur aufweist.

Im einfachsten Fall besteht das nicht dargestellte Rotorelement aus zwei oder mehreren leitenden Segmenten. Im magnetischen Wechselfeld der Erregerspule (2) entstehen in den Rotorsegmenten durch magnetische Induktion hervorgerufene Wirbelströme, die das erregende Feld schwächen. Durch die geometrische Form der Segmente wird der Wirbelstrom auf bestimmte Bahnen gezwungen, die dazu führen, daß das magnetische Feld in definierten Segmenten über den Umfang verändert wird. Diese ungleichmäßige Feldänderung führt dazu, daß die induzierten Spannungen in den Empfangsspulen (3) abhängig vom relativen Winkel des Rotorelementes zu den Empfangsspulen (3) sind. Die an den Empfangsspulen (3) abgegriffenen Induktionsspannungen verändern sich also mit der relativen Stellung des Rotorelementes zu den Empfängerspulen (3). Der Spannungsverlauf über den Drehwinkel ist dabei näherungsweise sinusförmig.

Da die Empfangsspule (3) aus mehreren um einen bestimmten Winkel versetzten Leiterbahnen (3 a, 3 b, 3 c) besteht, stehen für die Auswertung mehrere Spannungen zur Verfügung, deren Signalamplituden über den Winkel zueinander phasenverschoben sind. Zur Generierung der Winkelinformation werden diese Spannungen in einer Auswerteschaltung zueinander ins Verhältnis gesetzt. Dadurch wird die generierte Winkelposition unabhängig von den absoluten induzierten Spannungen und somit unabhängig von diversen Fertigungstoleranzen. Auch eingekoppelte Störungen werden durch diese Verhältnisbildung weitgehend unterdrückt.

Zur weiteren Erläuterung sei nun angenommen, die Kurzschlußleitung des nicht dargestellten Rotorelementes habe die gleiche Schleifenstruktur oder zumindest eine Schleifenstruktur mit gleicher Winkelperiodizität wie eine der Empfangsspulen (3). Weiter sei angenommen, zu einem gegebenen Zeitpunkt stände die Schleifenstruktur des Rotorelementes genau parallel zu der Schleifenstruktur der dick umrandet gezeichneten Empfangsspule (3 a) und würde von dieser Position aus um 60° weitergedreht.

Die sich hierbei an den Spulenanschlüssen (S1, S2, S3) ergebenden Spannungsverläufe (U1, U2, U3) sind in der Figur 4 dargestellt. In der Anfangsposition steht die Schleife des Rotorelementes parallel zur Empfangsspule (3 a). Da die Schleife eine Kurzschlußleitung darstellt, wird das Feld somit stark geschwächt und die in der Empfangsspule (3 a) induzierte Spannung (U1) ist minimal. Da die Empfangsspulen (3 b, 3 c) hier nur teilweise von der Schleife des Rotorelementes überdeckt werden, entsteht in beiden jeweils eine Spannung (U2, U3) mittlerer Größe, wobei deren Vorzeichen davon abhängt, in welcher Richtung der von der Kurzschlußleitung überdeckte Teil der Empfangsspulenwindung verläuft.

Nach einer Verschiebung des Rotorelementes um 20° überdeckt diese nun genau die Schleife der Empfangsspule (3 b), wodurch die Spannung (U2) an deren Anschlüssen (S2) nun minimal wird; bei einer Verschiebung um 40° erfährt entsprechend die Spannung (U3) an den Spulenanschlüssen (S3) der Empfangsspule (3 c) einen Null-Durchgang.

Nach 60° steht nun die die Kurzschlußleitung ausbildende Schleife des Rotorelementes wieder parallel zur Empfangsspule (3 a), wobei der Ausgangszustand wiederhergestellt ist.

Somit ändert sich das Ausgangssignal der Empfangsspulen (3) über den Drehwinkel etwa sinusförmig, und zwar entsprechend der Winkelperiodizität der einzelnen Empfangsspulen (3). Größere Winkel als hier zum Beispiel 60° können leicht durch Mitzählen der periodischen Wiederholungen der Ausgangssignale erfaßt werden.

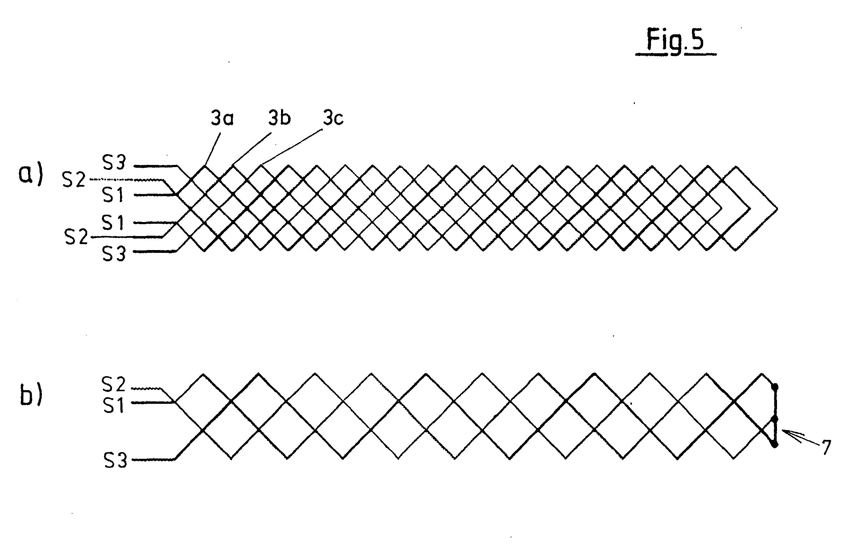

Im folgenden soll anhand der Figur 5 eine hinsichtlich des Schaltungsaufwandes wesentlich verbesserte Anordnung und Verschaltung der Empfangsspulen erläutert werden.

In der Figur 5 ist unter a) die Struktur der drei Empfangsspulen (3 a, 3 b, 3 c) (aus der Figur 3) mit ihren Anschlüssen (S1, S2, S3) auf eine lineare Strecke übertragen worden. Es ist ersichtlich, daß die Leiterbahndichte zur Ausbildung der drei Empfangsspulen hierbei recht hoch ist.

Der gleiche Informationsgehalt aus den Signalen der drei Empfangsspulen kann auch mit einer Leiterbahnanordnung nach der Figur 5 b) erzielt werden. Die Leiterbahndichte ist hier nur halb so groß wie in der Figur 5 a), was dadurch erreicht wird, daß bei jeder Empfangsspule "die Rückleitung eingespart" wird und jeweils ein Anschluß jeder Empfangsspule auf einen gemeinsamen Summenpunkt (7) geführt wird.

Dieser Summenpunkt (7) ist etwa dem Sternpunkt eines Drehstromgenerators vergleichbar. Das Potential des Summenpunktes ist dabei im Idealfall Null und wird daher von der Auswerteschaltung nicht bzw. allenfalls zur Korrektur von Störeinflüssen zugeführt.

Die "eigentlichen" Empfangsspulen ergeben sich nun durch Auswahl von jeweils zwei der "Hinleitungen", das heißt, die Empfangsspulenausgangssignale ergeben sich nun zwischen den Anschlüssen S1 und S2 bzw. S2 und S3 bzw. S3 und S1, wobei der Verlauf dieser Signale qualitativ den in der Figur 4 dargestellten entspricht.

Der besondere Vorteil dieser Ausführungsform im Vergleich zu der in der Figur 5 a) liegt darin, daß bei gleicher Leiterbahndichte eine doppelt so hohe Anzahl von Empfangsspulen auf eine Leiterplatte aufgebracht werden kann, wodurch das Auflösungsvermögen des erfindungsgemäßen induktiven Winkelsensors entsprechend verdoppelt werden kann.

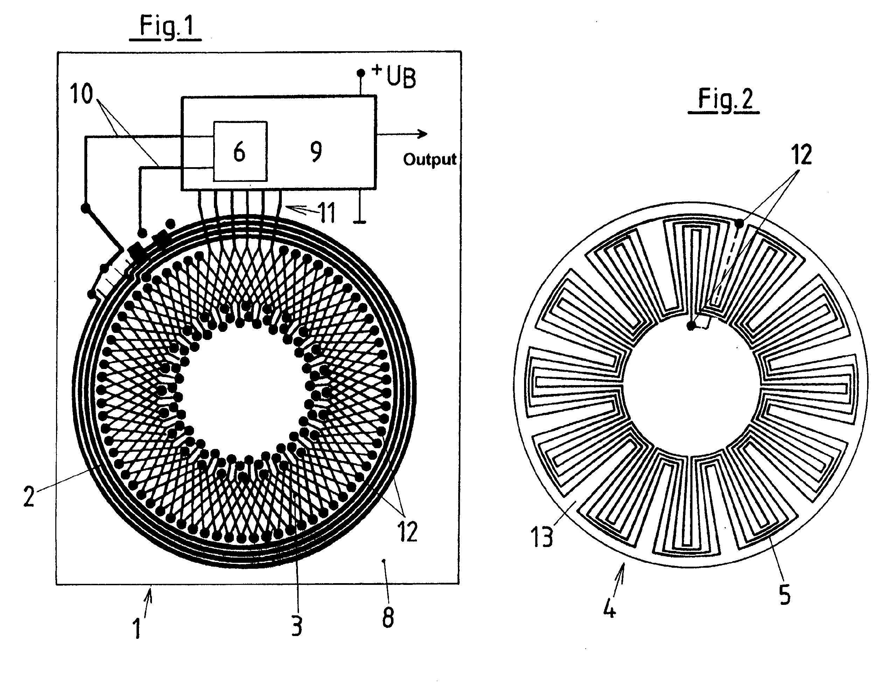

Eine Skizze zur technischen Ausführung des induktiven Winkelsensors ist in den Figuren 1 und 2 dargestellt.

Figur 1 zeigt das Statorelement 1. Auf einer mehrlagigen Leiterplatte (8) sind die Erregerspule (2), die Empfangsspulen (3) sowie eine Auswerteschaltung (9) angeordnet. Der Schaltkreis der Auswerteschaltung (9) beinhaltet überdies den Oszillator für die Erregerspule (2), ausgeführt als LC-Schwingkreis (6), wobei die Induktivität durch die Erregerspule (2) ausgebildet wird.

Die Auswerteschaltung (9) besitzt neben den Anschlüssen (10, 11) zur Anbindung der Erregerspule (2) und der Empfangsspulen (3) noch Spannungsversorgungsanschlüsse (+ UB, Masse) sowie einen Meßsignalausgang (Output), die z. B. zu einem nicht dargestellten Anschlußstecker geführt sind.

Die Anordnung der Erregerspule (2) und der Empfangsspulen (3) ist etwa kreisförmig ausgebildet, wobei im Umfangsbereich der Anordnung die Erregerspule (2) aus mehreren konzentrisch geführten Leiterbahnwindungen gebildet wird. Die Empfangsspulen (3) werden durch auf verschiedenen Leiterplattenebenen angeordnete Leiterbahnen jeweils in Umfangsrichtung eine sich periodisch wiederholende Schleifenstruktur (z. B. dreieck- oder mäanderförmig) ausbilden. Die Winkelperiodizität jeder dieser Schleifenstrukturen beträgt dabei 30°.

Jeweils ein Anschluß dieser sechs Leiterbahnschleifen ist mit der Auswerteschaltung (9) verbunden, die jeweils anderen Anschlüsse sind auf der Leiterplatte (8) mit einer nicht dargestellten Summenleitung elektrisch miteinander verbunden.

Die Auswerteschaltung (9) richtet die in den Empfangsspulen (3) induzierten Wechselspannungen gleich, verstärkt sie und setzt zur Positionsauswertung die Ausgangsspannungen von jeweils zwei Empfangsspulen zueinander ins Verhältnis (ratiometrische Auswertung).

Die scheinbar unübersichtliche Anordnung der Empfangsspulen (3) ergibt sich in der Figur 1 nur dadurch, daß sämtliche auf verschiedenen Ebenen der Leiterplatte (8) angeordneten Empfangsspulen in eine gemeinsame Zeichenebene projiziert werden. Die punktförmigen Leiterbahnendungen bezeichnen jeweils Durchkontaktierungen (12) zwischen den einzelnen Ebenen der Leiterplatte (8).

In der Figur 2 ist eine mögliche Leiterbahnstruktur eines zugehörigen Rotorelementes (4) dargestellt. Auf einem kreisförmigen Träger (13), z. B. einer Leiterplatte, ist eine Kurzschlußleitung (5) in Form einer sich in Umfangsrichtung des Trägers (13) periodisch wiederholenden Schleifenstruktur aufgebracht.

Die Winkelperiodizität dieser Schleifenstruktur beträgt 30° und ist somit genauso groß wie die Winkelperiodizität der einzelnen Empfangsspulenstrukturen. Diese Übereinstimmung ist dabei nicht zwingend, aber aus Gründen einer möglichst einfachen auszuführenden Signalauswertung zweckmäßig.

Die gesamte Kurzschlußleitung (5) wird hier durch eine einzige Leiterbahn gebildet, die neben der charakteristischen Mäanderform auch noch mehrfach spiralförmig ineinander verschachtelt ist. Die Anfangs- und Endpunkte der Kurzschlußleitung (5) sind über zwei Durchkontaktierungen (12), z. B. auf der Leiterplattenrückseite, elektrisch miteinander verbunden. Hierzu kann auf der Leiterbahnrückseite auch eine gleichstrukturierte Kurzschlußleitung vorgesehen werden.

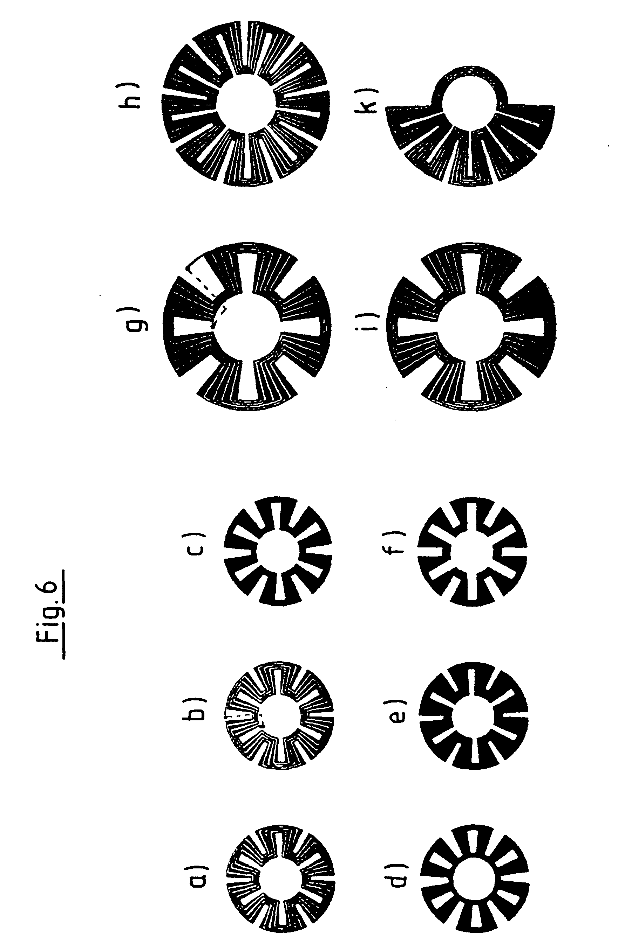

Wie die Figur 6 zeigt, kann die in der Figur 2 dargestellte Schleifenstruktur der Kurzschlußleitung anwendungsabhängig variiert werden.

Die in der Figur 6 dargestellten Ausführungsformen (a - k) der Kurzschlußleitung des Rotorelementes unterscheiden sich u. a. im Durchmesser (a - f bzw. g - k), welcher insbesondere der Baugröße des zugehörigen Statorelementes angepaßt ist.

Ein weiteres Unterscheidungsmerkmal ist die Winkelperiodizität der Schleifenstruktur; dargestellt sind:
- 90°-Sensoren (g, i)
- 60°-Sensoren (a - f)
- ein 40°-Sensor (h) sowie
- ein 36°-Sensor (k) mit einer nur über einen Teilbereich des Umfangs geführten Mäanderstruktur, geeignet z. B. für Winkelsensoren mit einem eingeschränkten Meßbereich.

Vergleicht man die Schleifenstruktur von Rotorelement h und i, so besitzt h zwar einen weitaus komplexeren Aufbau, liefert dafür aber auch eine entsprechend höhere Winkelauflösung.

Weiterhin können verschachtelte (a, b, g - k) und unverschachtelte (c - f) Leiterschleifen unterschieden werden.

Verschachtelte Leiterschleifen können durch Aufbringung eines leitenden Materials auf einen isolierenden Träger realisiert werden, z. B. Leiterbahnen auf Leiterplatte. Bei unverschachtelten Schleifenstrukturen kann im Gegensatz dazu die Leiterschleife selbst das Rotorelement ausbilden, wodurch das Rotorelement z. B. als kostengünstiges metallisches Stanzteil ausgeführt werden kann.

Die komplexeren verschachtelten Leiterschleifen (a - b, g - k) wechselwirken stärker mit dem primären Feld und bewirken somit ein deutlicheres Sensorausgangssignal.

Auch die Art der Verschachtelung kann noch weiter unterschieden werden:

Konzentrisch verschachtelte Leiterschleifen sind die Ausführungen (a, h - k), die Ausführungen (b und g) zeigen dagegen eine spiralförmige Verschachtelung, ebenso wie auch das Ausführungsbeispiel in der Figur 2.

## Patentansprüche

1. Induktiver Winkelsensor
- mit einem Statorelement (1), welches eine mit einer periodischen Wechselspannung beaufschlagte Erregerspule (2), sowie mehrere Empfangsspulen (3) aufweist,
- und einem Rotorelement (4), welches die Stärke der induktiven Kopplung zwischen Erregerspule (2) und Empfangsspulen (3) in Abhängigkeit seiner Winkelposition relativ zum Statorelement (1) vorgibt,
- und einer Auswerteschaltung (9) zur Bestimmung der Winkelposition des Rotorelements (4) relativ zum Statorelement (1) aus den in den Empfangsspulen (3) induzierten Spannungssignalen,
- wobei das Rotorelement (4) mindestens eine Kurzschlussleitung (5) ausbildet, welche zumindest über Teilbereiche, in Umfangsrichtung des Rotorelements (4) eine sich periodisch wiederholende Schleifenstruktur ausbildet,
**dadurch gekennzeichnet,**
- **dass** das Rotorelement (4) als ein aus leitfähigem Material bestehendes Stanzteil ausgeführt ist,
- **dass** jeweils ein Anschlusspunkt einer Empfangsspule (3a, 3b, 3c) mit einem gemeinsamen Summenpunkt (7) elektrisch verbunden ist und
- **dass** das Statorelement eine mehrlagige Leiterplatte umfasst, auf der die Erregerspule (2), die Empfangsspulen (3) sowie eine Auswerteschaltung (9) angeordnet sind, wobei die Empfangsspulen (3) durch auf verschiedenen Leiterplattenebenen angeordnete Leiterbahnen jeweils in Umfangsrichtung eine sich periodisch wiederholende Schleifenstruktur ausbilden.

2. Induktiver Winkelsensor nach Anspruch 1, **dadurch gekennzeichnet, dass** die Empfangsspulen (3) entlang, zumindest von Teilbereichen, des Umfangs des Statorelementes (1) eine periodische Schleifenstruktur ausbilden.

3. Induktiver Winkelsensor nach Anspruch 1, **dadurch gekennzeichnet, dass** die Schleifenstruktur aus mehreren konzentrisch oder spiralartig ineinander verschachtelten Windungen besteht.

4. Induktiver Winkelsensor nach Anspruch 1 und 2, **dadurch gekennzeichnet, dass** die Schleifenstrukturen von Empfangsspulen (3) und Kurzschlussleitung (5) die gleiche winkelabhängige Periodizität aufweisen.

5. Induktiver Winkelsensor nach Anspruch 1, **dadurch gekennzeichnet, dass** das Statorelement (1) eine ungradzahlige Anzahl, und zwar mindestens 3 Empfangsspulen (3) aufweist.

6. Induktiver Winkelsensor nach Anspruch 1, **dadurch gekennzeichnet, dass** die Erregerspule (2) eine konzentrisch geführte Leiterbahn entlang des Umfangs des Statorelementes
(1) ausbildet.

7. Induktiver Winkelsensor nach Anspruch 1, **dadurch gekennzeichnet, dass** der Erregerkreis als LC-Schwingkreis (6) ausgebildet ist.

8. Induktiver Winkelsensor nach Anspruch 1, **dadurch gekennzeichnet, dass** die Auswerteschaltung (9) die Leiterspannungen der Empfangsspulen (3) ratiometrisch auswertet.

9. Induktiver Winkelsensor nach Anspruch 1, **dadurch gekennzeichnet, dass** die Empfangsspulen mit Kondensatoren zu Resonanzkreisen verschaltet sind.

10. Induktiver Winkelsensor nach Anspruch 1, **dadurch gekennzeichnet, dass** die Auswerteschaltung (9) als ASIC realisiert ist.

## Claims

1. Inductive angle sensor
- comprising a stator (1) with an excitation coil (2) that AC voltage is cyclically fed to and with a plurality of telecoils (3);
- and a rotor (4) setting the strength of the inductive link between the excitation coil (2) and the telecoils (3) by means of its angular position in relation to the stator (1);
- and an analyzer circuit (9) which takes the voltage signals induced by the telecoils (3) as a basis for determining the angular position of the rotor (4) in relation to the stator (1);
- wherein the rotor (4) has at least one short-circuit line (5) which generates a loop structure periodically repeating across at least some sections of the rotor's (4) peripheral direction,
**characterized in that**
- the rotor (4) is designed as a stamped part made of conductive material;
- one junction point of each telecoil (3a, 3b, 3c) is electrically connected to a shared convergence point (7); and **in that**
- the stator comprises and multi-layer circuit board that the excitation coil (2), the telecoils (3) and an analyzer circuit (9) are mounted on, wherein the telecoils (3), due to conductive tracks being located on different layers of the circuit board, generate a loop structure periodically repeating in peripheral direction.

2. Inductive angle sensor of claim 1, **characterized in that** the telecoils (3) generate a periodic loop structure across at least some sections of the stator's (1) circumference.

3. Inductive angle sensor of claim 1, **characterized in that** the loop structure consists of a plurality of windings interlacing like spirals or concentric circles.

4. Inductive angle sensor of claims 1 and 2, **characterized in that** the loop structures generated by the telecoils (3) and the short-circuit line (5) have the same periodicity that is dependent on the angle.

5. Inductive angle sensor of claim 1, **characterized in that** the stator (1) comprises an odd number of no less than 3 telecoils (3).

6. Inductive angle sensor of claim 1, **characterized in that** the excitation coil (2) has a concentric conductive track along the stator's (1) circumference.

7. Inductive angle sensor of claim 1, **characterized in that** the excitation circuit is a resonant LC circuit (6).

8. Inductive angle sensor of claim 1, **characterized in that** the analyzer circuit (9) takes ratiometric readings of the line voltages of the telecoils (3).

9. Inductive angle sensor of claim 1, **characterized in that** the telecoils, together with capacitors, make up resonant circuits.

10. Inductive angle sensor of claim 1, **characterized in that** the analyzer circuit (9) is an ASIC.

## Revendications

1. Capteur d'angle inductif
avec un élément stator (1) présentant une bobine excitatrice (2) alimentée en tension alternative périodique ainsi que plusieurs bobines réceptrices (3),
et un élément rotor (4) qui définit l'intensité du couplage inductif entre la bobine excitatrice (2) et les bobines réceptrices (3) en fonction de sa position angulaire relative par rapport à l'élément stator (1),
et un circuit d'évaluation (9) pour la détermination de la position angulaire relative de l'élément rotor (4) par rapport à l'élément stator (1) à partir des signaux de tension induits dans les bobines réceptrices (3),
l'élément rotor (4) formant au moins une conduite en court-circuit (5), laquelle forme, au moins dans des zones partielles, une structure de boucle se répétant périodiquement dans le sens circonférentiel de l'élément rotor (4),
**caractérisé en ce**
**que** l'élément rotor (4) est réalisé en tant qu'élément estampé se composant d'un matériau conducteur,
**qu'**un point de raccordement d'une bobine réceptrice (3a, 3b, 3c) est respectivement relié électriquement à un point cumulé (7) commun et
**que** l'élément stator comprend un carte de circuits imprimés multicouches sur laquelle se trouvent la bobine excitatrice (2), les bobines réceptrices (3) ainsi qu'un circuit d'évaluation (9), les bobines réceptrices (3) formant une structure de boucle se répétant périodiquement à travers différentes pistes conductives disposées sur différents niveaux de la carte de circuits imprimés respectivement dans un sens circonférentiel.

2. Capteur angulaire inductif selon la revendication 1, **caractérisé en ce que** les bobines réceptrices (3) forment une structure de boucle périodique le long, tout du moins de sections partielles, de la circonférence de l'élément stator (1).

3. Capteur angulaire inductif selon la revendication 1, **caractérisé en ce que** la structure de boucle se compose de plusieurs spires concentriques ou emboîtées les unes dans les autres à la manière d'une spirale.

4. Capteur angulaire inductif selon les revendications 1 et 2, **caractérisé en ce que** les structures de boucles des bobines réceptrices (3) et de la conduite en court-circuit (5) présentent la même périodicité dépendant de l'angle.

5. Capteur angulaire inductif selon la revendication 1, **caractérisé en ce que** l'élément stator (1) présente un nombre impair de bobines réceptrices (3) s'élevant au moins à 3.

6. Capteur angulaire inductif selon la revendication 1, **caractérisé en ce que** la bobine excitatrice (2) forme une piste conductive concentrique le long de la circonférence de l'élément stator (1).

7. Capteur angulaire inductif selon la revendication 1, **caractérisé en ce que** le circuit excitateur est formé en tant que circuit oscillant LC (6).

8. Capteur angulaire inductif selon la revendication 1, **caractérisé en ce que** le circuit d'évaluation (9) évalue de manière ratiométrique les tensions des conducteurs des bobines réceptrices (3).

9. Capteur angulaire inductif selon la revendication 1, **caractérisé en ce que** les bobines réceptrices sont câblées avec les condensateurs pour former des circuits à résonance.

10. Capteur angulaire inductif selon la revendication 1, **caractérisé en ce que** le circuit d'évaluation (9) est réalisé en tant que circuit intégré propre à une application.
